## Europäisches Patentamt
## European Patent Office
## Office européen des brevets

(11) Numéro de publication: **0 021 938**
**B1**

(12) **FASCICULE DE BREVET EUROPEEN**

(45) Date de publication du fascicule du brevet:
01.02.84

(51) Int. Cl.³: **H 04 N 7/16,** H 04 N 7/04

(21) Numéro de dépôt: **80400826.6**

(22) Date de dépôt: **09.06.80**

(54) Système de télévision à contrôle d'accès utilisant une clé électronique variable.

(30) Priorité: **15.06.79 FR 7915400**

(43) Date de publication de la demande:
**07.01.81 Bulletin 81/1**

(45) Mention de la délivrance du brevet:
**01.02.84 Bulletin 84/5**

(84) Etats contractants désignés:
**BE CH DE GB IT LI NL SE**

(56) Documents cités:
**FR - A - 2 316 821**
**FR - A - 2 320 676**
**US - A - 3 538 243**
**US - A - 4 025 948**
**US - A - 4 045 814**
**US - A - 4 081 832**

(73) Titulaire: **Etablissement Public de Diffusion dit "Télédiffusion de France", 21-27 rue Barbès, F-92120 Montrouge (FR)**
Titulaire: **Babonneau, Gérard, 14, rue Théodore Botrel, F-35830 Betton (FR)**

(72) Inventeur: **Sechet, Claude, 32, rue de Piré, F-35000 Rennes (FR)**
Inventeur: **Babonneau, Gérard, 14, rue Théodore Botrel, F-35830 Betton (FR)**
Inventeur: **Guillou, Louis Claude, 7, rue de l'Ise - Bourgbarré, F-35230 Saint Erblon (FR)**

(74) Mandataire: **Mongrédien, André et al, c/o BREVATOME 25, rue de Ponthieu, F-75008 Paris (FR)**

BUNDESDRUCKEREI BERLIN

## Système de télévision à contrôle d'accès
## utilisant une clé électronique variable

La présente invention a pour objet un système de télévision à contrôle d'accès utilisant une clé électronique variable.

Le problème du contrôle de l'accès à des informations télédiffusées pose avant tout celui de l'embrouillage des informations à l'émission à l'aide d'une clé appropriée et celui du désembrouillage à la réception au moyen d'une clé analogue, qui n'est en possession que des seuls usagers ayant acquitté régulièrement une taxe d'abonnement.

On connaît déjà de nombreux systèmes de télévision munis de moyens d'embrouillage à l'émission et de désembrouillage à la réception. De tels systèmes sont décrits notamment dans le brevet français 1 106 670, dans le brevet allemand 1 907 580, dans la demande de brevet français FR-A-2 330 236 du 27.5.1977 aux noms conjoints de l'Etat Français et de Télédiffusion de France, dans le brevet français 1 034 776, dans le brevet allemand 1 254 676 et dans les brevets américains 2 510 046, 2 619 530, 2 892 882 et 2 972 009.

Les procédés d'embrouillage mis en oeuvre dans ces systèmes sont basés sur l'introduction d'un décalage de la position de l'impulsion de synchronisation de ligne, sur une inversion périodique du signal complet et sur le changement de polarité du signal d'image, ou sur une combinaison de ces opérations. Dans tous ces procédés, il convient de faire parvenir aux postes récepteurs, d'une manière ou d'une autre, des signaux permettant la restitution de la clé qui sera nécessaire pour recouvrer l'information claire.

La présente invention a pour objet un système de télévision de ce genre, mais dans lequel la clé permettant le désembrouillage est transmise aux récepteurs de manière originale et avantageuse.

Dans les systèmes antérieurs, la transmission de cette clé ne donne pas entière satisfaction car elle n'est en général pas compatible avec les nouveaux services numériques mis au point récemment et qui sont ou seront offerts aux téléspectateurs. Il s'agit notamment du système dit »ANTIOPE« (Acquisition Numérique et Télévisualisation d'Images Organisées en Pages d'Ecriture), du système dit »TITAN« (Terminal Interactif des Télétexte à Appel par Numérotation), du système dit EPEOS (Enregistrement Programmé des Emissions sur Ordre des Sources) etc... On sait qu'il s'agit essentiellement,

—  pour le premier, d'un système de vidéotex diffusé, permettant d'insérer sur des voies de télévision des informations alphanumériques organisées en pages et en magazine,
—  pour le second, d'un système de vidéotex interactif compatible avec le système ANTIOPE et permettant l'accès à des bases de données (informations générales, annuaires, etc...) et à des services interactifs (transactions, messages, enseignement) par le réseau téléphonique,
—  et pour le troisième, d'un système de messagerie de programmes consistant à offrir, par l'intermédiaire d'une voie de diffusion de données, la télécommande depuis une source d'émission de l'action d'enregistrement par un équipement récepteur (magnétoscope par exemple) d'un programme télévisuel présélectionné.

Ces trois systèmes utilisent, pour la diffusion de l'information, des moyens et une procédure dénommée »DIDON« (Diffusion de Données Numériques). Cette procédure est compatible avec la diffusion du signal de télévision.

La présente invention a justement pour objet un moyen de contrôle d'accès qui présente une totale compatibilité avec ces différents systèmes.

A cette fin, le système de l'invention présente deux caractéristiques essentielles:

1. En premier lieu, il utilise un système à double clé:
   —  une clé de service K, qui permet d'embrouiller l'information et qui change de manière aléatoire à des intervalles relativement courts, de l'ordre de quelques minutes,
   —  une clé d'abonnement, pouvant prendre plusieurs valeurs $C_i$ selon le type d'abonnement; cette clé change elle aussi de manière aléatoire mais à des intervalles plus longs, de lórdre du mois. Cette clé d'abonnement est inscrite sur un support d'abonnement introduit dans chaque poste récepteur. Les deux clés K et $C_i$ sont combinées à l'émission pour constituer des messages $M_i$.
2. En second lieu, ce sont les messages $M_i$ et non la clé de service proprement dite K, qui sont transmis de l'émetteur aux récepteurs; cette transmission s'effectue selon la procédure DIDON évoquée plus haut, ce qui confère bien au système une compatibilité avec tous les services numériques basés sur cette procédure. A la réception, les messages $M_i$ reçus sont combinés à la clé d'abonnement $C_i$ fournie, par un support d'abonnement, ce qui permet de restituer la clé K nécessaire au désembrouillage du signal reçu.

De façon plus précise, la présente invention a donx pour objet un système de télévision muni de moyens de contrôle d'accès, ce système comprenant un émetteur et des postes récepteurs, l'émetteur comprenant un circuit de formation d'un signal d'image organisé en lignes et en trame et d'un signal de son et un organe d'émission desdits signaux, chaque poste récepteur comprenant un organe de réception des signaux transmis et un moyen de visualisation de l'image et de restitution du son, caractérisé en ce qu'il comprend en outre:

A) Un centre de gestion d'abonnements comprenant des moyens pour engendrer une pluralité de signaux numériques constituant des clés d'abonnement $C_i$, ces clés d'abonnement changeant de manière aléatoire à des intervalles relativement longs de l'ordre du mois;

B) un émetteur comprenant:
   a) un générateur d'un signal numérique constituant une clé de service K, cette clé changeant de manière aléatoire à des intervalles relativement courts de l'ordre de quelques minutes,
   b) un circuit de formation de messages numériques $M_i$, obtenus à partir desdites clés d'abonnement $C_i$ et de la clé de service K par un algorithme paramétré par les clés d'abonnement, soit $M_i = F_{C_i}(K)$, ce circuit délivrant autant de messages qu'il y a de clés d'abonnement, ces messages changeant avec la clé de service,
   c) un système de diffusion de données de type DIDON apte à insérer les messages $M_i$ dans les intervalles de suppression de trame du signal d'image,
   d) un automate d'embrouillage utilisant la clé de service K, cet automate recevant le signal d'image et/ou de son et délivrant des signaux d'image et/ou de son embrouilles qui sont dirigés ensuite vers l'organe d'émission, cet embrouillage n'affectant pas les messages contenus dans les intervalles des suppression de trame,

C) dans chaque poste récepteur:
   a) un support d'abonnement sur lequel est inscrit un signal correspondant à l'une au moins des clés d'abonnement $C_i$,
   b) un circuit d'extraction des données DIDON contenues dans le signal reçu, ce circuit restituant les messages $M_i$,
   c) un circuit de restitution de la clé de service recevant d'une part les messages $M_i$ délivrés par le circuit précédent et, d'autre part, la clé d'abonnement $C_i$ fournie par le support d'abonnement, ce circuit déroulant un algorithme $K = G_{C_i}(M_i)$ qui permet de restituer le signal correspondant à la clé de service K employée dans l'émetteur,
   d) un automate de désembrouillage qui est relié, d'une part, à l'organe de réception d'où il reçoit les signaux embrouillés d'image et éventuellement de son, et, d'autre part, au circuit de restitution d'où il reçoit la clé de service K, cet automate délivrant des signaux d'image et éventuellement de son désembouillés, qui sont dirigés ensuite vers le moyen de visualisation de l'image et de restitution du son;

D) au moins un poste de chargement de supports d'abonnement, ce poste étant relié au centre de gestion d'abonnements d'où il reçoit les signaux correspondant aux différentes clés d'abonnement $C_i$ engendrées par ce centre, chaque poste étant apte à recevoir temporairement des supports d'abonnement et à y inscrire durablement l'une des clés d'abonnement $C_i$.

De préférence, l'automate d'embrouillage comprend:

— un générateur de suite pseudo-aléatoire réinitialisé à chaque début de trame par la clé de service K, ce générateur fournissant au début de chaque ligne un signal numérique d'embrouillage,
— un circuit de transformation du signal d'image et éventuellement de son, la transformation effectuée par ce circuit étant définie par le signal numérique délivré par ledit générateur de suite pseudo-aléatoire.

Dans ce cas, l'automate de désembrouillage comprend:

— un générateur de suite pseudo-aléatoire identique à celui de l'automate d'embrouillage et réinitialisé comme lui à chaque début de trame par la clé de service K, ce générateur fournissant au début de chaque ligne un signal numérique de désembrouillage,
— un circuit apte à effectuer sur le signal d'image et éventuellement de son, la transformation inverse de celle de l'automate démbrouillage, cette transformation étant déterminée par le signal numérique de désembrouillage délivré par le générateur de suite pseudo-aléatoire.

L'opération d'embrouillage à l'émission peut être de tout type connu et notamment être conforme aux procédés décrits dans les documents cités plus haut. Dans une variante avantageuse cependant on utilise un moyen basé sur une permutation circulaire des échantillons à embrouiller. Un tel moyen est décrit notamment dans la demande de brevet français 76/24 304 publiée le 4.3.1977 sous le numéro 2 320 676 et dans la demande de brevet français FR-A-2 431 809 du 15.02.1980 aux noms conjoints de »Etabilissement Public de Diffusion dit »Télédiffusion de France«, André LOUINEAU et Gérard BABONNEAU et intitulée: »Procédés et dispositifs de brouillage et de débrouillage pour images de télévision«.

Naturellement cette opération d'embrouillage peut affecter à la fois l'image et le son. En ce qui concerne la transmission du son, elle peut s'effectuer par l'un ou l'autre des quatre moyens suivants:

— un canal son ordinaire,
— une voie numérique utilisant les intervalles de suppression de trame et fonctionnant selon la procédure DIDON,
— une voie numérique utilisant les intervalles de suppression de ligne,
— une voie numérique utilisant des signaux supplémentaires insérés dans les salves de chrominance.

Le moyen utilisé pour la transmission du son peut être repéré à l'aide d'éléments binaires faisant partie de la clé de service K.

L'insertion du son dans une voie numérique disposée dans l'intervalle de suppression de ligne fait l'objet d'une autre demande de brevet FR-A-2 459 594 du 9.01.1981 aux noms de »Etablissement Public de Diffusion dit Télédiffusion de France« et Gérard BABONNEAU et intitulée »Système de télévision à multiplexage de signaux d'image et/ou de données et de signaux numériques de son«.

De toutes façons, les caractéristiques et avantages de l'invention apparaîtront mieux après la description qui suit, d'exemples de réalisation donnés à titre explicatif et nullement limitatif. Cette description se réfère à des dessins annexés sur lesquels:

— la figure I est un schéma synoptique d'un système de télévision à contrôle d'accès conforme à l'invention,
— la figure 2 représente de façon schématique des moyens démbrouillage utilisant une permutation circulaire d'échantillons,
— la figure 3 illustre le standard adopté de préférence pour le signal de vidéo,
— la figure 4 illustre schématiquement les emplacements dans le signal de synchronisation de trame des signaux annonçant un changement de clé,
— la figure 5 illustre l'organisation des moyens de détection de changement de clé.

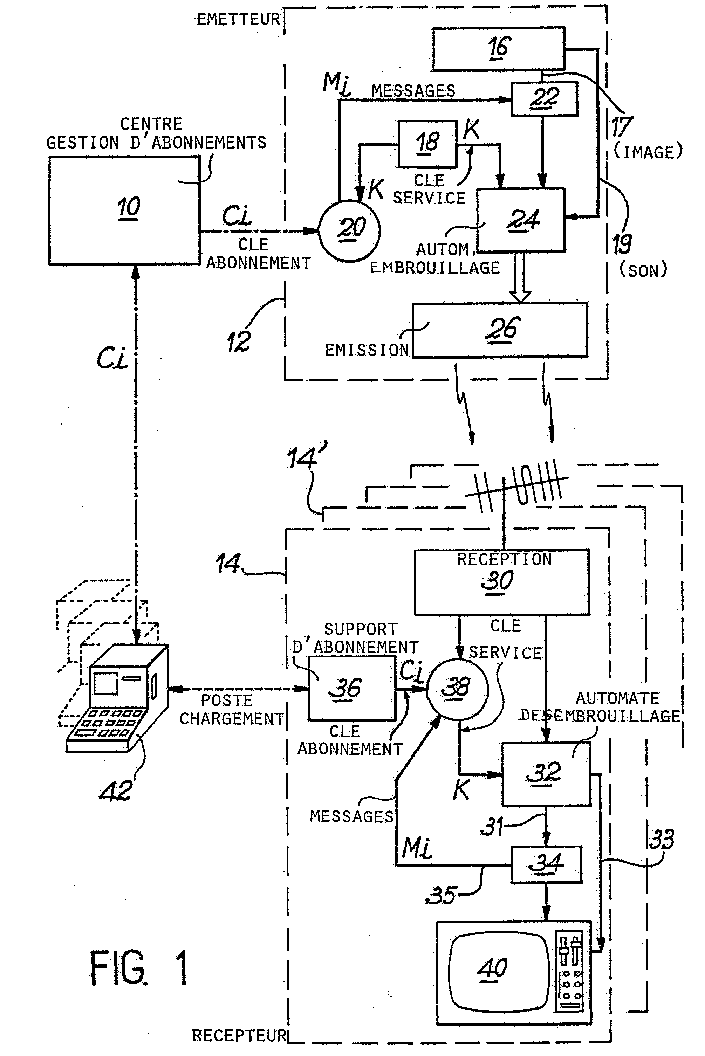

Le système représenté sur la figure 1 comprend tout d'abord un centre de gestion d'abonnement 10 qui engendre une pluralité de signaux constituant des clés d'abonnement $C_i$, ces clés changeant de manière aléatoire à des intervalles relativement longs de l'ordre du mois.

Le système de télévision proprement dit est organisé autour d'un émetteur 12 et il comprend une pluralité de récepteurs 14.

L'émetteur 12 comprend:

a) un circuit 16 de formation de signaux de télévision comprenant une partie relative à un signal d'image véhiculé par une connexion 17 et une partie relative au son véhiculé par une connexion 19;
b) un générateur 18 d'un signal constituant une clé de service K, cette clé changeant de manière aléatoire à des intervalles relativement courts de l'ordre de quelques minutes,
c) un circuit 20 de formation de messages numériques $M_i$ à partir des clés d'abonnement $C_i$ engendrées par le centre 10 et de la clé de service K engendrée par le générateur 18; pour cela, le circuit 20 déroule un algorithme paramétré par les clés d'abonnement, soit $M_i = F_{C_i}(K)$; il délivre autant de messages $M_i$ qu'il y a de clés d'abonnement, ces messages changeant avec la clé de service K;
d) un système 22 de diffusion de données de type DIDON, apte à insérer les messages $M_i$ dans les intervalles de suppression de trame du signal d'image provenant du circuit 16 par la connexion 17,
e) un automate démbrouillage 24 utilisant la clé de service K, pour embrouiller le signal d'image et/ou de son, cet embrouillage n'affectant pas les messages $M_i$ contenus dans les intervalles de suppression de trame; les signaux embrouillés délivrés par cet automate sont ensuite dirigés vers un organe d'émission 26.

Dans chaque poste récepteur 14 du système représenté, on trouve:

a) un organe 30 de réception des signaux diffusés;
b) un automate de désembrouillage 32 relié à l'organe de réception 30 d'où il reçoit les signaux embrouillés d'image et éventuellement de son; cet automate fonctionne à l'aide de la clé de service K et délivre des signaux désembrouillés d'image et de son respectivement véhiculés par des connexions 31 et 33;
c) un circuit 34 d'extraction des données DIDON contenues dans le signal d'image reçu, ce circuit restituant les messages $M_i$, par une connexion 35;
d) un support d'abonnement 36 sur lequel est inscrit un signal correspondant à l'une au moins des clés d'abonnement $C_i$,
e) un circuit 38 de restitution de la clé de service K à partir des messages $M_i$ délivrés par le circuit 34 et de la clé d'abonnement $C_i$ délivrée par le support d'abonnement 36, ce circuit 38 déroulant un algorithme $K = G_{C_i}(M_i)$ qui permet de restituer le signal correspondant à la clé de service K employé dans l'émetteur, cette clé étant alors adressée au circuit de désembrouillage 32;
f) un moyen 40 de visualisation d'image et de restitution du son.

Le système représenté comprend enfin au moins un poste de chargement 42, adapté aux supports d'abonnement 36, ce poste étant relié au centre de gestion d'abonnement 10 d'où il reçoit les signaux correspondant aux différentes clés d'abonnement $C_i$ engendrées par ce centre. Chaque poste 42 est apte à recevoir temporairement les supports d'abonnement et à y inscrire durablement (dans une mémoire par exemple) l'une des clés d'abonnement $C_i$.

Pour illustrer le fonctionnement de ce système à double clé, on peut prendre un exemple de schéma d'abonnement qui utiliserait quatre types d'abonnements: 1 mois, 3 mois, 6 mois et un an. En plus de sa durée, un abonnement est caractérisé par son mois de début. Avec un tel schéma, durant un mois donné et pour un service donné, il y a donc 22 clés d'abonnement susceptibles d'être utilisées par les usagers: une clé mensuelle, trois clés trimestrielles, six clés semestrielles et douze clés annuelles.

Chaque mois, le centre de gestion des taxations 10 fournit à l'émetteur 12 une liste de 22 clés d'abonnement $C_i$ en cours pour chaque service diffusé par cet émetteur. En outre, il fournit aux postes de chargement 42 une autre liste de 4 clés qui vont débuter le mois suivant (un mois, trois mois, six mois et un an), pour chaque service, avec les tarifs d'abonnements.

Une machine appropriée, installée dans chaque point de vente, inscrit certaines de ces clés sous forme de blocs d'abonnement dans les supports 36. Un bloc d'abonnement peut être composé par exemple de quatre champs:

1.  un »code de service« de 16 éléments binaires qui désigne le service considéré,
2.  un »indice d'abonnement« de 8 éléments binaires qui caractérise un abonnement pour un service considéré. Deux de ces éléments binaires indiquent le type d'abonnement (1, 3, 6 ou 12 mois) et les six autres indiquent le mois de début d'abonnement (1 à 60 modulo 5 ans),
3.  Une »clé d'abonnement« de 128 éléments binaires qui est l'information fondamentale du bloc.
4.  un »code de redondance cyclique« de 16 éléments binaires. Ce code porte sur les 152 éléments binaires précédents et permet de vérifier le bloc d'abonnement avant d'en faire usage.

Un bloc d'abonnement est donc composé de 168 éléments binaires, soit 21 octets. Un tel bloc peut aisément être inscrit dans un support genre »carte de crédit« qui serait muni d'une mémoire PROM (Programmable Read Only Memory) d'une capacité de 4096 éléments binaires utilisables à cette fin. Une telle carte peut accueillir jusqu'à 24 blocs d'abonnement ayant les caractéristiques indiquées.

Pour chaque service payant, toutes les cinq minutes environ, une nouvelle clé du service K est engendrée au hasard, dans l'émetteur. Ainsi, au cours d'une session d'un service (une heure ou quelques heures), quelques dizaines de clés du service peuvent se succéder.

Dès qu'un émetteur engendre une nouvelle clé de service K, il calcule, pour chaque clé d'abonnement en cours $C_i$, pour ce service, un message $M_i$ par un algorithme dans lequel les

clés $C_i$ jouent le rôle de paramètres.

Ainsi, pour un service doté du schéma d'abonnement indiqué plus haut, à tout instant, 22 messages différents sont en vigueur. La durée de vie d'un message est égale à celle de la clé du service K, et pour un service donné, à tout instant, il existe autant de messages qu'il y a de clés d'abonnement en cours.

Le calcul des messages $M_i$ à partir des clés d'abonnement $C_i$ et de la clé K est effectué dans le centre d'émission par le circuit 20 qui est organisé autour d'un micoprocesseur. Ce circuit peut être conforme à celui qui est décrit dans la demande de brevet européen EP 0 014 652 intitulée »Système de vidéotex muni de moyens de contrôle d'accès à l'information« et dans la demande européene EP 0 014 653 et intitulée »Sytème de transmission d'information entre un centre d'émission et des postes récepteurs, ce système étant muni d'un moyen de contrôle de l'accès à l'information transmise«.

Un tel circuit est prorammé pour mettre en oeuvre un algorithme qui utilise les clés d'abonnement $C_i$ (127 éléments binaires) et la clé du service K (56 éléments binaires), de la manière suivante:

1.  On forme un mot $\pi$ de redondance de confusion qui comprend 61 éléments binaires engendrés au hasard à chaque mise en oeuvre de l'algorithme;
2.  on calcule $\pi^{-1}$, inverse de $\pi$ modulo $2^{61}-1$ par un programme arithmétique utilisant une variante de algorithme d'Euclide;
3.  on effectue une première multiplication par un autre programme arithmétique: $\nu = K \cdot \pi^{-1}$ modulo $(2^{61}-1)$;
4.  on calcule $\gamma$, inverse de C modulo $2^{127}-1$, par un programme similaire à celui de 2;
5.  enfin, on calcule le message par un programme similaire à 3°): $M = \gamma \cdot (\nu + 2^{64} \cdot \pi)$ modulo $(2^{127}-1)$.

Les programmes nécessaires à ces calculs peuvent être développés par un microprocessur du type 8080, de la Société INTEL.

L'ensemble des messages $M_i$ en vigueur constitue l'information de contrôle d'accès associée au service diffusé. Selon la caractéristique essentielle de l'invention, cette information est diffusée par la procédure DIDON au niveau du circuit 22 et elle est restituée à la réception au niveau du circuit 34.

Cette procédure DIDON est connue en soi. Elle est décrite notamment dans:

—  la demande de brevet français FR-A-2 313 825 aux noms conjoints de »Etablissement Public de Diffusion« dit »Télédiffusion de France« et l'Etat Français représenté par le Secrétaire d'Etat aux Postes et Télécommunications (Centre National d'Etudes des Télécommunications) et intitulée: »Système de diffusion de données«,
—  le premier certificat d'addition à la demande précédente, FR-A-2 393 480,
— la demande de brevet français FR-A-2 404 350 du 20.04.79, division de la première,
— l'article de Y. GUINET publié dans »Revue de l'U.E.R. Cahier Technique«, N° 165 octobre 1977, p. 242, et intitulé: »Etude comparative des systèmes de télétexte en radiodiffusion« — Quelques avantages de la diffusion des données par paquets appliquée au télétexte«.

On rappellera brièvement qui le système DIDON est un système de radiodiffusion de données qui fait usage du canal de télévison. Cette diffusion s'effectue selon une procédure de mise en paquet de données. Chaque paquet occupe la partie active de la ligne de télévision, ce qui permet d'assurer une bonne compatibilité avec les modes habituels d'utilisation du canal.

Comme, dans la présente invention, le canal de radiodiffusion est affecté à un programme de télévision, seule la ressource marginale constituée par l'intervalle de suppression de trame peut être utilisée pour la transmission des messages $M_i$.

Dans la procédure DIDON, chaque paquet comporte deux parties, l'une appelée préfixe, l'autre appelé bloc de données. Le préfixe qui sert à assurer la gestion du paquet, comporte huit octets; deux servent à la synchronisation des éléments binaires; un sert à la synchronisation octet; trois portent le code de la voie, y compris sa protection; un porte l'indice de continuité; le dernier octet décrit le format (ou la longueur) du bloc de données.

Le bloc de données suit le préfixe. Sa longueur maximale dépend de la fréquence d'horloge et de la durée active de la ligne. La fréquence d'horloge est adaptée à la largeur de bande du canal. La modulation utilisée est le »non-retour à zéro« (NRZ), mis en forme pour adapter la répartition énergétique spectrale au canal de transmission.

Les messages $M_i$ ayant été transmis et reçus par cette procédure DIDON, il reste à reconstituer la clé de service K. C'est le rôle du circuit 38 qui peut être constitué comme décrit dans les deux demandes de brevets N° 79 02994 et 79 02995 déjà citées. Ce circuit est programmé pour développer un algorithme $K = G_{C_i} (M_i)$ qui est, comme à l'émission, un algorithme à double corps. Les opérations sont les suivantes:

1. Le message $M_i$ (127 éléments binaires) utiles est saisi octet par octet et une multiplication par $C_i$ est effectuée sur le premier corps CG $(2^{127} - 1)$. On forme ainsi un mot $\mu$:

$$\mu = M \cdot C \text{ modulo } (2^{127} - 1)$$

D'après la construction de M à l'émission, les éléments binaires 1 à 61 de $\mu$ représentent le mot $v$, tandis que les éléments binaires 65 à 125 représentent le mot $\pi$. Bien entendu, les éléments binaires 62, 63, 64, 126 et 127 doivent être nuls. S'ils ne le sont pas, on met le mot $v$ à zéro avant de continuer le calcul.

2. $\pi$ et $v$ sont multipliés sur le deuxième corps CG $(2^{61} - 1)$, ce qui fait disparaître la redondance de confusion et l'on obtient $K = v \cdot \pi$ modulo $(2^{61} - 1)$.
Un nouveau test de vraisemblance intervient ici puisque K ayant 56 éléments binaires utiles, les éléments 57, 58, 59, 60 et 61 doivent être nuls. Dans le cas contraire, K est mis à zéro avant la poursuite des opérations.

3. Les 56 éléments binaires utiles de K sont alors disponibles sous forme de huit octets impairs.

En ce qui concerne enfin les moyens permettant de réaliser un support d'abonnement 36 et un poste de chargement 42, ils peuvent être conformes aux moyens décrits dans la demande de brevet européen EP 0 014 654 et intitulée »Carte d'abonnement pour récepteur de vidéotex et poste de chargement de ladite carte«.

L'embrouillage et le désembrouillage du signal d'image, qui ont lieu respectivement dans les circuits 22 et 32 peuvent avantageusement être obtenus par la technique décrite dans la demande déjà citée. Il s'agit d'un procédé dans lequel on effectue les opérations suivantes:

Le signal à embrouiller est d'abord échantillonné, puis les échantillons sont insérés dans une ligne de signal vidéo; les n échantillons $V_0$ à $V_n$ constituant une ligne sont permutés circulairement de $(p+1)$ positions, de manière que les échantillons $V(p+1)$ à $V_n$ soint placés avant les échantillons $V_0$ à $V_p$; les échantillons sont ensuite transmis dans cet ordre permuté.

A la réception, les échantillons du signal embrouillé sont à nouveau circulairement permutés de $(n-p)$ positions pour restituer la suite initiale.

Le nombre n est déterminé ligne par ligne, suivant une loi qui est fixée par l'émetteur et transmise aux récepteurs.

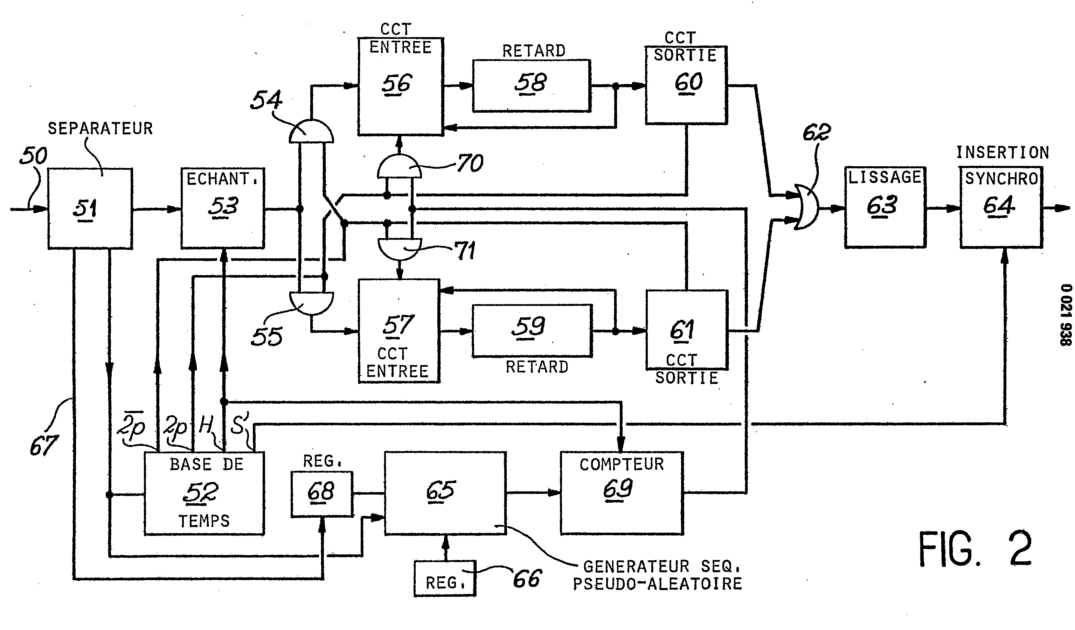

La figure 2 représente le schéma synoptique d'un circuit démbrouillage pouvant être utilisé dans l'invention. Le signal vidéo à embrouiller est introduit par la liaison 50 dans un circuit séparateur 51 délivrant une impulsion de synchronisation de ligne à un circuit de base de temps 52 et les signaux de luminance et de chrominance à un circuit d'échantillonnage 53. Dans le circuit de base de temps 52, les impulsions de synchronisation de ligne sont utilisées, d'une manière classique, pour engendrer des signaux d'horloge H à la fréquence d'échantillonnage et des signaux de parité et d'imparité de ligne respectivement $2p$ et $\overline{2p}$. La sortie du circuit d'échantillonnage 53 est reliée en parallèle aux entrées de signal de deux portes ET 54 et 55 dont les sorties sont respectivement reliées à deux circuits d'entrées 56 et 57. Les sorties de ces circuits sont respectivement reliées aux entrées de deux circuits à retard 58 et 59 respectivement reliés à des circuits de sortie 60 et 61. Les sorties des circuits 60 et 61 sont reliées aux entrées d'une porte OU 62 dont la sortie est reliée à l'entrée d'un circuit de lissage 63 réuni à un circuit 64 dans lequel on insère une impulsion de synchronisation de ligne dans le signal sortant de 63.

Le codeur de la figure 2 comprend encore un générateur de séquence numérique pseudo-aléatoire 65, qui peut, comme dans la demande de brevet français 75 34029 précitée, être un registre à décalage à dix étages pourvu de neuf points de rebouclage, dont le rebouclage direct entre le dernier et le premier étage. Les huit bouclages intermédiaires sont mis en fonctionnement effectif quand un niveau 1 est appliqué à l'entrée de commande de l'étage correspondant. Ces niveaux de commande de rebouclage sont appliqués à partir d'un registre de chargement 66 qui contient en permanence un mot de huit éléments binaires. Ce mot définit la configuration du générateur. A chaque signal de synchronisation de trame émis par le circuit séparateur 51 et véhiculé par une liaison 67 vers un registre 68 qui contient un mot de 10 éléments binaires, le générateur 65 est initialisé suivant ce mot, chaque étage prenant l'état défini par l'élément binaire correspondant. A chaque trame, la même séquence numérique de 10 éléments binaires est engendrée, au rythme des impulsions de synchronisation de ligne délivrées par le circuit 51 au générateur 65. Le mot de huit éléments binaires contenu dans le registre 66 et le mot de dix éléments binaires contenu dans le registre 68 constituent ensemble la clé d'accès aux émissions embrouillées.

La sortie du générateur 65 délivre un mot de 10 éléments binaires à l'entrée d'initialisation d'un compteur 69 dont l'entrée de comptage reçoit les impulsions d'horloge H du circuit de base de temps 52. Le compteur fonctionne en décomptant à l'émission. Tant que le compteur 69 n'est pas à zéro, sa sortie de signal est au niveau »1«; dès qu'il est à zéro, cette sortie passe à »0«.

La seconde entrée de la porte 54 est reliée à la sortie $\overline{2p}$ de 52 de manière que les signaux des lignes impaires transmis par le circuit 53 soient dirigés vers le circuit 54. La seconde entrée de la porte 55 est reliée à la sortie 2p de manière que les signaux des lignes paires soient dirigés vers le circuit 57.

Une entrée de commande du circuit 56 est reliée à la sortie d'une porte ET 70 dont la première entrée est reliée à la sortie 2p de 53 et dont la seconde entrée est reliée à la sortie de compteur 69. L'entrée de commande du circuit 57 est reliée à la sortie d'une porte ET 61 dont la première entrée est reliée à la sortie $\overline{2p}$ de 52 et dont l'entrée est reliée à la sortie du compteur 69.

L'entrée de commande du circuit 60 est reliée à la sortie 2p de 52 tandis que l'entrée de commande du circuit 61 est reliée à la sortie $\overline{2p}$ de 52.

Enfin, une entrée du circuit 64 est reliée à une sortie du circuit 52 qui délivre un signal de synchronisation S', déduit du signal de synchronisatiuon entrant.

Le fonctionnement du circuit de la figure 2 est le suivant. Pendant une ligne impaire, le signal $\overline{2p}$ est au niveau haut, la porte 54 est ouverte, le circuit 60 est ouvert vers la porte 62, le circuit 61 est fermé et la porte 55 est fermée. De plus, la porte 70 est fermée tandis que la porte 71 est ouverte tant que la sortie du compteur 69 est au niveau haut. Donc, dans le circuit 58, il entre les échantillons d'une ligne impaire tandis qu'il en sort les échantillons de la ligne impaire précédente embrouillée.

Pendant la ligne paire suivante, le signal 2p est au niveau haut, la porte 54 est fermée, le circuit 60 est fermé, le circuit 61 est ouvert et la porte 55 est ouverte. De plus, la porte 71 est fermée tandis que la porte 70 est ouverte et que la sortie de 69 est au niveau haut; les premiers échantillons sont envoyés vers l'entrée de 58 tandis que les derniers sont poussés vers la sortie de 58, le contenu de 58 reste inchangé jusqu'à la fin de la ligne paire. Ensuite, on retrouve une ligne impaire et le fonctionnement déjà décrit. En considérant le circuit 59, on obtient de la même manière un embrouillage des lignes paires.

On comprendra aisément qui le circuit de la figure 2 peut être utilisé à la réception pour restaurer les formes initiales des lignes en utilisant les mêmes circuits 66 et 68, mais en branchant le compteur 60 de manière à ce qu'après son initialisation à chaque ligne par 60, il compte vers son contenu maximal au lieu de décompter vers zéro, comme c'est le cas pour le codeur à l'émission.

Quand les échantillons traités sont sous forme analogique, les circuits à retard 58 et 59 sont avantageusement des circuits à transfert de charges. Quand les échantillons traités sont sous forme numérique codée, ces circuits à retard sont des registres à décalage.

Dans l'exemple décrit, le signal numérique utilisé par le générateur de séquence pseudo-aléatoire contient $10+8=18$ éléments binaires (eb). Mais la clé peut être constituée par un mot de plus de 18 eb, par exemple de 32 eb. Les 14 autres éléments binaires de la clé permettent de déterminer quelles foncitons de transformation sont actives ou non (2 eb), quel partage de la resource est choisi, quelle relation existe entre les 10 eb du registre à décalage et certains paramètres des transformations de retard pur ou de décalage circulaire. D'une façon générale, la clé peut véhiculer des informations complémentaires relatives aux configurations posibles du signal. Ceci est mis à profit pour donner la possibilité de remplacer un programme image et son unique, pleine définition, par quartre programmes basse définition indépendants, résultat obtenu en partageant l'espace écran en quatre quadrants recevant quatre images indépendantes obtenues par réduction par des moyens numériques, la vidéo et le canal son en quatre canaux son bande étroite. Cette possibilité peut être prévue dans la définition du système d'embrouillage. Les récepteurs »grand public« ne sont pas nécessairement munis de ces moyens qui peuvent être réservés à des utilisateurs particuliers.

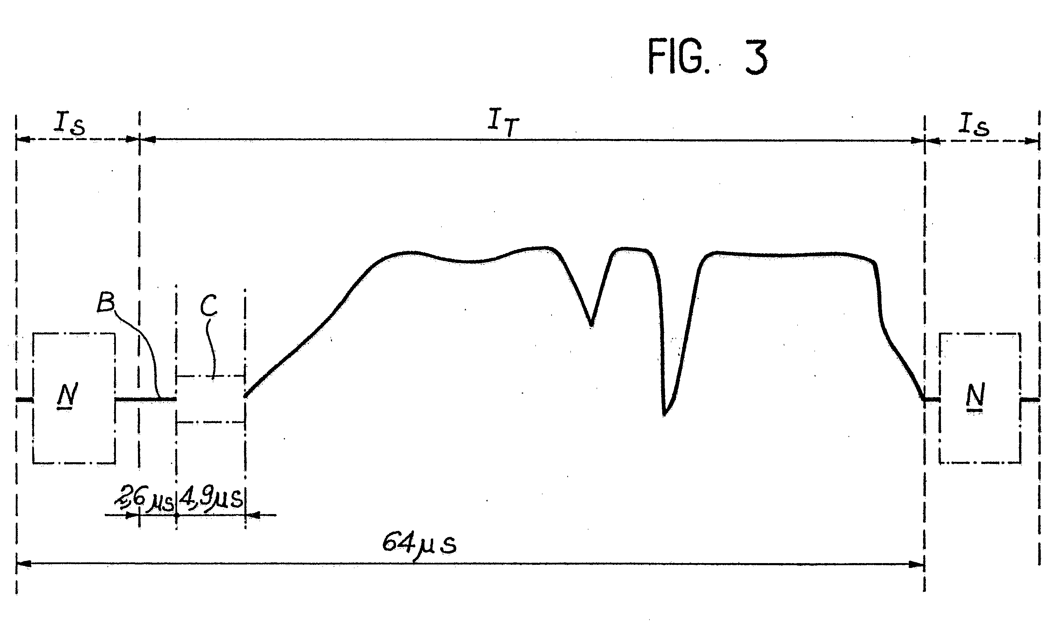

Lémbrouillage de l'image sensibilise celle-ci aux défauts de transmission et nécessite de prévoir des redondances. Dans le standard de vidéo adopté, un intervalle de temps de 2,6 μs est dégagé dans ce but. Cet intervalle demeure libre de tout signal avant embrouillage. Ce standard est représenté sur la figure 3. Chaque ligne du signal vidéo comporte:

— un intervalle de suppression Is, qui n'est pas affecté par les transformations pseudo-aléatoires, sauf en ce qui concerne le contenu d'un éventuel signal numérique s'y trouvant. Cet intervalle contient la synchronisation ligne et, éventuellement, une voie numérique N destinée à acheminer les sons.

— un intervalle $I_T$ contenant l'image, qui est affecté par les transformations pseudo-aléatoires. Il contient nécessairement 7,5 μs réservées à la salve de chrominance C (4,9 μs) et aux manoeuvres d'embrouillage (intervalle B de 2,6 μs). Cette dernière marge de manoeuvre se trouvera suivant les circonstances, d'un seul tenant ou non, en début on en fin de lignes.

Pendant la suppression de trame ou la fenêtre DIDON, aucune transformation de l'espace image n'est effectuée, dans le but de garder la possibilité de la diffusion de données en clair dans un signal dont l'image et le son sont embrouillés.

Lorsque le son est acheminé par une voie numérique utilisant les intervalles Is ou par une voie numérique utilisant l'insertion de signaux supplémentaires dans les salves de chrominance, il est échantillonné à l'une des fréquences suivantes, compatibles avec la synchronisation:

$$f_0 = 7812,5 \text{ Hz}$$
$$f_1 = 15\,625 \text{ Hz}$$
$$f_2 = 31\,259 \text{ Hz}$$

Mais comme indiqué plus haut, un son de bonne qualité peut accompagner l'image embrouillée. De même, on peut adopter un partage de la capacité du canal entre au moins 4 sons de qualité au moins téléphonique (300 – 3400 Hz; rapport signal/bruit = 40 dB).

Comme indiqué plus haut, le choix du mode utilisé peut être indiqué dans le mot de clé.

A propos du changement de clé, il faut noter encore ceci.

Un système de coordination est nécessaire d'une part pour indiquer aux récepteurs autorisés quelle clé est en service et, d'autre part, pour fixer l'instant exact, à la trame près, où l'on passe d'une clé à la suivante. Ceci peut être obtenu par l'utilisation:

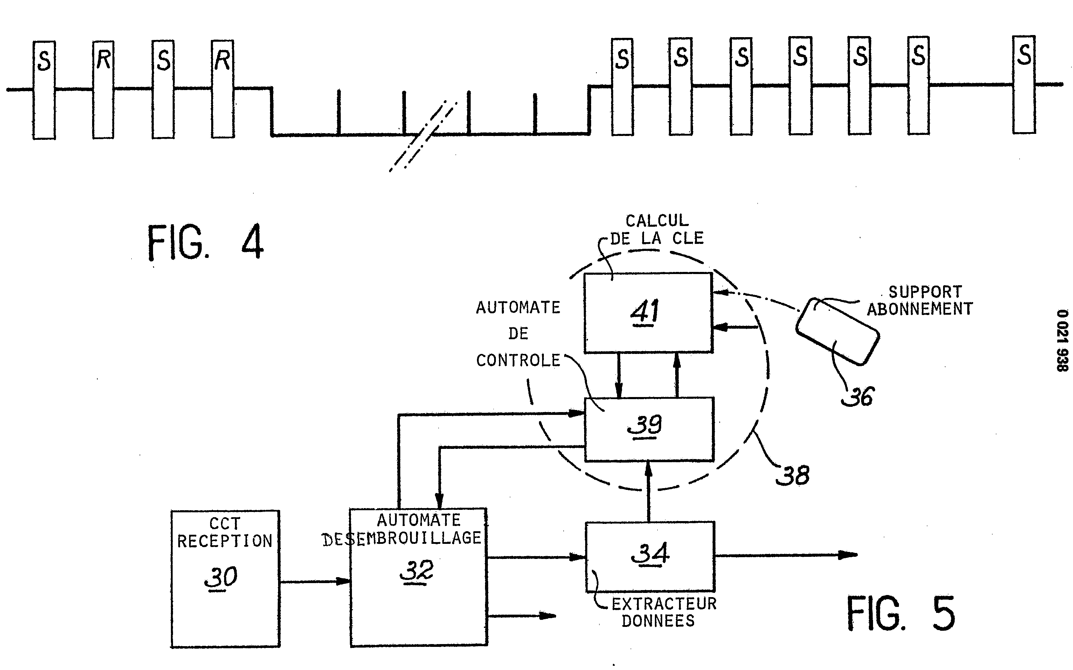

1. de messages de repérage de la future clé, diffusés par le système DIDON, mais interprétables uniquement par les organes de calcul de clé munis du support d'abonnement approprié;
2. de signaux de marquage temporel insérés dans une trame avant le changement de clé comme illustré sur la figure 4.

Sur cette figure qui représente le signal de trame, les espaces marqués S correspondent aux intervalles de synchronisation du standard de la figure 3 et les espaces marqués R désignent des intervalles qui contiennent un repère annonçant un changement de clé, ce repère pouvant être constitué par un élément binaire porté à »1«.

Le circuit 38 de restitution de la clé, tel qu'il est représenté dans le schéma de la figure 1 comprend alors et conformément à la figure 5, un automate de contrôle 39 relié à un système 41 de calcul de la clé. Cet automate de contrôle reçoit les messages du circuit 34 extracteur de données DIDON et les délivre au circuit 41 de calcul de la clé, après avoir effectué une éventuelle mise en forme (conversion parallèle-série, par exemple).

Deux cas sont à considérer pour l'automate de contrôle 39:

— à la mise sous tension du récepteur, il extrait un message, en demande la traduction au système 41 de calcul de la clé, et valide immédiatement cette clé vers l'organe 32 de désembrouillage des images et/ou du son;
— en cours de fonctionnement, l'automate écoute les messages qui lui parviennent tout en maintenant en vigueur la clé déjà calculée précédemment. Lorsque les messages comportent un élément binaire annonçant un »changement de clé«, l'automate en demande à nouveau la traduction, ce qui lui restitue la future clé K'. Dès cet instant, l'automate attend qu'une impulsion de changement de clé lui parvienne pour remplacer l'ancienne clé K par la nouvelle K'.

## Revendications

1. Système de télévision à contrôle d'accès, constitué d'un émetteur (12) et de postes récepteurs (14), l'émetteur comprenant un circuit (16) de formation d'un signal d'image organisé en lignes et en trames et d'un signal de son, un organe (22) d'émission desdits signaux et un automate d'embrouillage (24) utilisant une clé de service K, cet automate recevant le signal d'image et/ou de son et délivrant des signaux d'image et/ou de son embrouillés qui sont dirigés ensuite vers l'organe d'émission, chaque poste récepteur comprenant un organe (30) de réception des signaux transmis, un moyen (40) de visualisation de l'image et de restitution du son, et un automate de désembrouillage (32) relié à l'organe de réception (30) et travaillant avec ladite clé de service K, cet automate délivrant des signaux d'image et éventuellement de son désembrouillés, qui sont dirigés ensuite vers le moyen de visualisation (40) de l'image et de restitution du son, caractérisé en ce qu'il comprend en outre:

A) un centre de gestion d'abonnements (10) comprenant des moyens pour engendrer une pluralité de signaux numériques constituant des clés d'abonnement Ci, ces clés d'abonnement changeant de manière aléatoire à des intervalles relativement longs de l'ordre du mois;

B) dans l'émetteur:
a) un générateur (18) d'un signal numérique constituant la clé de service K, cette clé changeant de manière aléatoire à des intervalles relativement courts de l'ordre de quelques minutes,
b) un circuit (20) de formation de messages numériques Mi obtenus à partir desdites clés d'abonnement Ci et de la clé de service K par un algorithme paramétré par les clés d'abonnement, soit $Mi = F_{Ci}$ (K), ce circuit délivrant autant de messages qu'il y a de clés d'abonnement, ces messages changeant avec la clé de service,
c) un système de diffusion de données de type DIDON apte à insérer les messages Mi dans les intervalles de suppression de trame du signal d'image, l'embrouillage n'affectant pas les messages contenus dans les intervalles de suppresion de trame,

C) dans chaque poste récepteur:
a) un support d'abonnement (36) sur lequel est inscrit un signal correspondant à l'une au moins des clés d'abonnement ci,
b) un circuit (34) d'extraction des données DIDON contenues dans le signal reçu, ce circuit restituant les messages Mi,
c) un circuit (38) de restitution de la clé de service recevant d'une part les messages Mi délivrés par le circuit précédent et, d'autre part, la clé d'abonnement Ci fournie par le support d'abonnement, ce circuit déroulant un algorithme $K = G_{Ci}$ (M) qui permet de restituer le signal correspondant à la clé de service K employée dans l'émetteur,

D) au moins un poste de chargement (42) de supports d'abonnement, ce poste étant relié au centre de gestion d'abonnements d'où il reçoit les signaux correspondant aux différentes clés d'abonnement Ci engendrées par ce centre, chaque poste étant apte à recevoir temporairement des supports d'abonnement et à y inscrire durablement l'une des clés d'abonnement Ci.

2. Système de télévision selon la revendication 1, caractérisé en ce que:

A) l'automate d'embrouillage comprend:
a) un générateur (18) de (65) suite pseudo-aléatoire réinitialisé à chaque début de trame par la clé de service K, ce générateur fournissant au début de chaque ligne un signal numérique d'embrouillage,
b) un circuit (24) de transformation du signal d'image et éventuellement de son, la transformation effectuée par ce circuit étant définie par le signal numérique délivré par le générateur de suite pseudo-aléatoire,

B) l'automate de désembrouillage comprend:
a) un générateur de suite pseudo-aléatoire identique à celui de l'automate démbrouillage et réinitialisé comme lui à chaque début de trame par la clé de service K, ce générateur fournissant au début de chaque ligne un signal numérique de désembrouillage,
b) un circuit apte à effectuer sur le signal d'image et éventuellement de son, la transformation de celle de l'automate d'embrouillage, cette transformation inverse étant déterminée par le signal numérique de désembrouillage délivré par le générateur de suite pseudo-aléatoire.

3. Système de télévision selon la revendication 1, caractérisé en ce que la clé de service contient des éléments binaires indiquant le moyen utilisé pour la transmission du son, ce moyen pouvant être:

— un canal son ordinaire,
— une voie numérique utilisant les intervalles de suppression de trame et fonctionnant selon la procédure DIDON,
— une voie numérique utilisant les intervalles des suppresssion de ligne,
— une voie numérique utilisant des signaux supplémentaires insérés dans les salves de chrominance.

4. Système de télévision selon l'une quelconque des revendications 1 à 3, caractérisé en ce que l'émetteur comprend un moyen pour engendrer des signaux de marquage temporel insérés dans une trame, ces signaux annonçant un changement de clé de service, et en ce que le récepteur comprend un moyen pour détecter ces signaux de marquage, déclencher la recherche de la future clé de service K' et maintenir en attente cette future clé.

5. Système de télévision selon la revendication 4, caractérisé en ce que chaque message comprend un élément binaire indiquant le changement de clé dans l'émetteur, le changement de clé correspondant s'opérant dans les récepteurs dès détection de cet élément binaire.

**Patentansprüche**

1. Fernsehsystem zur Steuerung des Zutritts, bestehend aus einem Sender (12) und aus Empfängern (14), wobei der Sender eine Schaltung (16) zum Bilden eines Signales für ein Bild, das in Zeilen und Teilbildern angeordnet ist, und zum Bilden eines Tonsignales enthält, ein Teil (22) zum Senden dieser Signale enthält und einen Verschlüsselungsautomaten (24) enthält, der einen Dienstschlüssel K verwendet, wobei der Verschlüsselungsautomat (24) das Bildsignal und/oder Tonsignal empfängt und verschlüsselte Bildsignale und/oder Tonsignale liefert, die daraufhin gemeinsam an das Teil zum Senden gerichtet werden, wobei jeder Empfänger ein Teil (30) zum Empfangen der übertragenen Signale enthält, ein Mittel (40) zum Sichtbarmachen des Bildes und zum Wiederherstellen des Tones enthält, und einen Entschlüsselungsautomaten (32) enthält, der mit dem Teil zum Empfangen (30) verbunden ist und mit dem Dienstschlüssel K arbeitet, wobei der Automat die entschlüsselten Bildsignale und eventuell die entschlüsselten Tonsignale liefert, die daraufhin an das Mittel zum Sichtbarmachen (40) des Bildes und zum Wiederherstellen des Tones gerichtet werden, dadurch gekennzeichnet, daß es unter anderem folgende Merkmale enthält:

A) ein Verwaltungszentrum für die Abonnements (10) mit Mitteln zum Erzeugen einer Mehrzahl von numerischen Signalen, die aus Abonnementsschlüsseln Ci bestehen, wobei sich die Abonnementschlüssel auf zufällige Art in relativ langen Zeitintervallen in der Größenordnung von Monaten verändern;

B) im Sender:
   a) einen Generator (18) für ein numerisches Signal, das aus dem Dienstschlüssel K besteht, wobei sich dieser Schlüssel auf zufällige Art in relativ kurzen Intervallen in der Größenordnung von einigen Minuten ändert,
   b) eine Schaltung (20) zum Bilden von numerischen Botschaften (Mi), die ausgehend von diesen Abonnementschlüsseln Ci und von dem Dienstschlüssel K aufgrund eines Algorithmus erhalten werden, der durch die Abonnementschlüssel parametrisiert ist, wobei $Mi = F_{Ci} (K)$, wobei diese Schaltung soviele Botschaften liefert, wie Abonnementschlüssel bestehen, wobei sich diese Botschaften mit dem Dienstschlüssel ändern,
   c) ein System (22) zum Ausbreiten von gegebenen Größen des DIDON-Types, das dazu geeignet ist, die Botschaften Mi in Unterdrückungsintervalle des Teilbildes des Bildsignales einzufügen, wobei die Verschlüsselung nicht die in den Unterdrückungsintervallen der Einzelbilder enthaltenen Botschaften beeinflußt;

C) in jedem Empfänger:
   a) einen Abonnementträger (36), auf dem ein Signal eingeschrieben ist, das wenigstens einem der Abonnementschlüssel Ci entspricht,
   b) eine Schaltung (34) zum Herausholen der gegebenen DIDON-Größen, die in dem empfangenen Signal enthalten sind, wobei die Schaltung die Botschaften (Mi) wieder herstellt,
   c) eine Schaltung (38) zum Wiederherstellen des Dienstschlüssels, die einerseits die Botschaften Mi empfängt, die durch die vorhergehende Schaltung geliefert werden, und andererseits den Abonnementschlüssel Ci empfängt, der durch den Abonnementträger geliefert wird, wobei die Schaltung einen Algorithmus $K = G_{Ci} (M)$ abarbeitet, der es ermöglicht, das Signal wieder herzustellen, das dem Dienstschlüssel K entspricht, welcher im Sender verwendet wurde;

D) wenigstens ein Gerät zum Laden (42) der Abonnementträger, wobei das Gerät mit dem Verwaltungszentrum für die Abonnements verbunden ist, von dem es die Signale empfängt, die den verschiedenen Abonnementschlüsseln Ci entsprechen, die durch das Zentrum erzeugt sind, wobei jedes Gerät dazu geeignet ist, zeitweilig die Abonnementträger aufzunehmen und dort in dauerhafter Weise einen der Abonnementschlüssel Ci einzuschreiben.

2. Fernsehsystem nach Anspruch 1, dadurch gekennzeichnet, daß:

A) der Verschlüsselungsautomat folgende Merkmale aufweist:
   a) einen Pseudozufallsfolgen-Generator (18, 65), der bei jedem Teilbild-Anfang durch den Dienstschlüssel K wieder initialisiert wird, wobei der Generator zu Beginn jeder Zeile ein numerisches Verschlüsselungssignal erzeugt,
   b) eine Schaltung (24) zum Umwandeln des Bildsignals und evtl. des Tonsignales, wobei die Umwandlung durch die Schaltung bewirkt wird und durch das numerische Signal festgelegt ist, das durch den Pseudozufallsfolgen-Generator geliefert wird,

B) daß der Entschlüsselungsautomat folgende Merkmale aufweist:
   a) einen Pseudozufallsfolgen-Generator, der identisch zu demjenigen des Verschlüsselungsautomaten ist und wie jener zu jedem Teilbildbeginn durch den Dienstschlüssel K wieder initialisiert wird, wobei der Generator zu Beginn jeder Zeile ein numerisches Entschlüsselungssignal liefert,
   b) eine Schaltung, die dazu geeignet ist, auf das Bildsignal und evtl. auf das Tonsignal eine umgekehrte Umwandlung gegenüber der Umwandlung des Verschlüsselungsautomaten auszuführen, wobei diese Umwandlung durch das numerische Entschlüsselungssignal festgelegt ist, das durch den Pseudozufallsfolgen-Generator geliefert wird.

3. Fernsehsystem nach Anspruch 1, dadurch gekennzeichnet, daß der Dienstschlüssel Binärelemente aufweist, die das für die Tonübertragung verwendete Mittel anzeigen, wobei das Mittel eines der nachfolgenden Mittel sein kann:

— ein üblicher Tonkanal,
— ein numerischer Weg, der die Unterdrückungsintervalle des Teilbildes verwendet und nach dem DIDON-Verfahren arbeitet,
— ein numerischer Weg, der die Zeilen-Unterdrückungsintervalle verwendet,
— ein numerischer Weg, der zusätzliche Signale verwendet, die in die Chrominanz-Stöße eingesetzt sind.

4. Fernsehsystem nach einem der Ansprüche 1 bis 3, dadurch gekennzeichnet, daß der Sender ein Mittel zum Erzeugen von zeitlichen Markierungssignalen enthält, die in ein Teilbild eingesetzt werden, wobei diese Signale einen Wechsel des Dienstschlüssels ankündigen, und daß der Empfänger ein Mittel zum Erfassen dieser Markierungssignale, zum Auslösen der Suche nach einem zukünftigen Dienstschlüssel K' und zum Bereithalten dieses zukünftigen Schlüssels enthält.

5. Fernsehsystem nach Anspruch 4, dadurch gekennzeichnet, daß jede Botschaft ein binäres Element enthält, das die Veränderung des Schlüssels im Sender anzeigt, wobei die Veränderung des entsprechenden Schlüssels in den Empfängern nach der Erfassung dieses binären Elementes stattfindet.

**Claims**

1. Television system with access control comprising a transmitter (12) and receiving stations (14), the transmitter comprising a circuit (16) for formation of an image signal organized into lines and frames and a sound signal, a transmission device (26) for said signals and an automatic encoder (24) employing a service key K, said automatic encoder receiving the image- and/or sound-signal and deliviering encoded image- and/or sound-signals which are then directed to the transmission device, each receiving station comprising a receiving device (30) for transmitted signals, a means (40) for image display and sound emission, and an automatic decoder (32) connected to the receiving device (30) and operating with said service key K, said automatic decoder delivering decoded image- and optionally sound-signals, which are directed towards the image display- and sound emission-means (40), characterized in that it additionally comprises:

A) a subscription-administration centre (10) comprising means for generating a plurality of digital signals constituting the subscription keys Ci, said subscription keys changing in a random manner at relatively long intervals of the order of months;

B) in the transmitter:
   a) a generator (18) for a digital signal constituting the service key K, said key changing in random manner at relatively short intervals of the order of minutes,
   b) a formation circuit (20) for digital messages Mi obtained from said subscription keys Ci and the service key K by an algorithm having parameters provided by the subscription keys, i.e. $Mi = F_{Ci} (K)$, said circuit delivering as many messages as there are subscription keys, said messages changing with the service key,
   c) a data transmission system (22) of the DIDON type, adapted to insert the messages Mi during the frame suppression intervals of the image signal, the encoding not affecting the messages contained in the frame suppression interval,

C) in each receiving station:
   a) a subscription token (36) on which is inscribed a signal corresponding to at least one of the subscription keys Ci,
   b) an extraction circuit (34) for DIDON data contained in the received signal, said circuit restoring the messages Mi,
   c) a circuit (38) for restoration of the service key receiving, on the one hand, messages Mi delivered by the preceding circuit and, on the other hand, the subscription key Ci furnished by the subscription token, said circuit solving an algorithm $K = G_{Ci} (M)$ which enables restoration of the signal corresponding to the service key K employed in the transmitter,

D) at least one charging station (42) for subscription tokens, said station being connected to the subscription administration centre from which it receives signals corresponding to the different subscription keys Ci generated by the centre, each station being adapted to receive temporarily subscription tokens and to inscribe durably thereon one of the subscription keys Ci.

2. Television system according to claim 1 characterized in that:

A) the automatic encoder comprises:
   a) a pseudo-random sequence generator (18), (65) reset at the start of each frame by the service key K, said generator providing a digital encoding signal at the start of each line,

b)   a transformation circuit (24) for image- and optionally sound-signals, the transformation effected by this circuit being defined by the digital signal delivered by the pseudo-random sequence generator,

B)   the automatic decoder comprises:

a)   a pseudo-random sequence generator identical with that in the automatic encoder and similarly reset at the start of each frame by the service key K, this generator furnishing a digital decoding signal at the start of each line,

b)   a circuit adapted to carry out, on the image- and optionally sound-signal, the inverse transformation to that of the automatic encoder, said transformation being determined by the digital decoding signal delivered by the pseudo-random sequence generator.

3. Television system according to claim 1 characterized in that the service key contains binary elements indicationg the means employed for sound transmission, said means being:

— an ordinary sound channel,
— a digital system employing the frame suppression intervals and fuctioning according to the DIDON procedure,
— a digital system employing the line suppression intervals,
— a digital system employing supplementary signals inserted into the chrominance signals.

4. Television system according to any one of claims 1 to 3, characterized in that the transmitter comprises a means for generating transient marking signals for insertion into a frame, said signals announcing a change of the service key, and in that the receiver comprises a means for detecing these marking signals, releasing the future service key K', and holding this future key in readinesss.

5. Television system according to claim 4 characterized in that each message comprises a binary element indicating the change of key in the transmitter, the corresponding change of key coming into effect in the receivers after detection of said binary element.

**0 021 938**

FIG. 1

FIG. 2

## FIG. 3

FIG. 4

CALCUL DE LA CLE

AUTOMATE DE CONTROLE

SUPPORT ABONNEMENT

_41_

_36_

_38_

_39_

CCT RECEPTION

_30_

AUTOMATE DESEMBROUILLAGE

_32_

_34_

EXTRACTEUR DONNEES

FIG. 5

0 021 938